# DEMANDE DE BREVET EUROPEEN

(11) **EP 4 431 583 A1**
(43) Date de publication de la demande: **18.09.2024**
(21) Numéro de dépôt: 23161906.5
(22) Date de dépôt: 14.03.2023
(51) Int. Cl.: C09K 8/588, C08F 120/56, C09K 8/68, C09K 8/88

(54) **METHODE D'INJECTION D'UNE SOLUTION AQUEUSE DE POLYMERE DANS UNE FORMATION SOUTERRAINE**

(71) Demandeur: SNF Group, 42160 Andrézieux-Bouthéon (FR)
(72) Inventeur: FAVERO, Cédrick, 42160 ANDREZIEUX-BOUTHEON (FR)
(74) Mandataire: Cabinet Laurent & Charras

(57) **Abrégé**

La présente invention concerne une méthode d'injection d'une solution aqueuse d'un homopolymère P de 2-acrylamido-2-méthylpropane sulfonate et/ou ses sels ayant un poids moléculaire moyen en poids supérieur à 1 million de daltons, ladite méthode comprenant les étapes successives suivantes :
- à un emplacement A :
* préparation dans une unité mobile U1 de 2-acrylamido-2-méthylpropane sulfonate de sodium ou de potassium ou d'ammonium sous forme cristalline (AMPS.S),
* collecte d'une solution aqueuse S1 de 2-acrylamido-2-méthylpropane sulfonate de sodium ou de potassium ou d'ammonium AMPS.OS, issue de la purge de la préparation de l'AMPS.S dans l'unité mobile U1,

- à un emplacement A' :
* préparation dans une unité mobile U3 d'un homopolymère P par polymérisation par voie gel d'une solution aqueuse S3 d'AMPS.S,
* dissolution dans une unité mobile U4 du polymère P dans une solution saline SS1 pour obtenir une solution SM de polymère P,
* transfert de la solution SM de l'emplacement A' vers un emplacement B,

- à l'emplacement B :
* dilution dans une unité mobile U5 de la solution SM par une solution saline SS2 pour obtenir une solution SF,
* injection de la solution SF dans la formation souterraine pour l'extraction assistée d'hydrocarbures ou la fracturation hydraulique.

## Description

### Domaine de l'invention

L'invention concerne une méthode d'injection d'une solution aqueuse d'un homopolymère de 2-acrylamido-2-méthylpropane sulfonate de sodium ou de potassium ou d'ammonium dans une formation souterraine pour l'extraction assistée d'hydrocarbures (pétrole et/ou gaz) ou la fracturation hydraulique.

Plus précisément, la méthode concerne la préparation de la solution de polymère sur champs dans des unités modulaires pour son injection directe dans la formation souterraine.

### Etat antérieur de la technique

Les demandes de brevet FR2302305, FR2302307 etFR2302310 de la Demanderesse mettent en évidence l'intérêt d'injecter dans les formations souterraines des solutions salines de polymères de 2-acrylamido-2-méthylpropane sulfonate de sodium ou de potassium sous forme cristalline pour la récupération assistée d'hydrocarbures (pétrole et/ou gaz) ou la fracturation hydraulique.

Pour les techniques de récupération assistée du pétrole ou du gaz, ces polymères présentent des propriétés améliorées notamment en termes de filtrabilité et de stabilité chimique et thermique.

Pour la fracturation hydraulique, les polymères synthétiques à base de 2-acrylamido-2-méthylpropane sulfonate de sodium ou de potassium permettent d'avoir un effet de réduction de friction très élevé tout en garantissant un effet viscosifiant amélioré en solution saline (saumure). De plus, la bonne solubilité du polymère dans le fluide de fracturation, combiné à son caractère anionique sulfoné, permet d'éviter son adsorption sur la roche, ce qui induit un regain de conductivité et donc une augmentation du rendement de production d'hydrocarbures (pétrole et/ou gaz).

Toutefois, la synthèse des polymères à base de 2-acrylamido-2-méthylpropane sulfonate de sodium ou de potassium est effectuée sur des sites de fabrication qui sont éloignés des puits d'injection conduisant à ces formations souterraines, et de ce fait ceci implique une logistique coûteuse et énergivore pour acheminer les polymères sur les champs d'exploitation des hydrocarbures.

La forme physique du polymère qui permet de disposer de la plus grande concentration massique en matière active pour alimenter les champs pour l'EOR ou pour la fracturation hydraulique est la poudre. Toutefois, cette forme physique implique des unités de dissolution spécifiques (PSU : *Polymer Slicing Unit*, cuves de maturation, voir le document WO 2008/071808) onéreuses et énergivores.

Par ailleurs, la poudre est issue d'un procédé gel de polymérisation qui implique une opération de séchage du gel de polymère pour le transformer en poudre (brevet US 5633329). Il faut typiquement évaporer 1 à 5 volumes d'eau pour un volume de poudre, ce qui implique une augmentation des consommations en eau et énergie et donc une augmentation de l'empreinte carbone du produit.

### Résumé de l'invention

La Demanderesse a ainsi développé une méthode de préparation de solutions d'homopolymères de 2-acrylamido-2-méthylpropane sulfonate de sodium ou de potassium ou d'ammonium basée sur des unités modulaires afin de pouvoir effectuer toutes les étapes de préparation sur champs à proximité des formations souterraines à exploiter.

Cette méthode inclut (1) la préparation de de 2-acrylamido-2-méthylpropane sulfonate de sodium ou de potassium ou d'ammonium sous forme cristalline à un premier emplacement, (2) la synthèse du polymère et la préparation d'une solution concentrée en polymère à un second emplacement et enfin (3) la dilution de cette solution pour injection dans la formation souterraine à un troisième emplacement.

Cette méthode permet de fabriquer en flux continu la quantité de solution d'injection requise. De plus, elle permet de diminuer considérablement les frais de logistique (transport, dissolution du polymère) avec une faible empreinte en eau et en carbone (pas de séchage) et elle peut être transposée sur tout champs et toutes conditions de champs (salinité, dureté, température...) sans besoin d'installations classées à haut risque (chimique).

Le seul monomère à acheminer et à éventuellement stocker sur le premier emplacement est l'acide 2-acrylamido-2-méthylpropane sulfonique (AMPS) ou un de ses sels. Ce monomère, contrairement à des monomères tels que l'acrylonitrile, l'acrylamide ou l'acide acrylique, présente l'avantage d'être sous forme solide et donc de ne pas présenter de risque de fuite ou d'épandage. De plus, il n'est pas toxique (CMR) et reste stable à l'état solide en fonction de la température (pas thermosensible). Enfin, un autre avantage de l'AMPS ou un de ses sels, comparativement à l'acrylamide, est qu'il peut être polymérisé à plus forte concentration et sans besoin de refroidissement préalable car moins exothermique, ce qui engendre des gains énergétiques et rend transposable la méthode revendiquée en tout lieu, y compris dans les zones arides ou avec un stress hydrique saisonnier.

A titre d'illustration, 1 volume d'acrylamide et/ou d'acide acrylique nécessite d'être polymérisé en présence d'au moins 3 volumes d'eau et avec un refroidissement préalable à 0°C alors que l'AMPS ou un de ses sels nécessite seulement 1 à 2 volumes d'eau avec un début de polymérisation en solution à la température ambiante.

### Présentation de l'invention

Plus précisément, l'invention concerne une méthode d'injection d'une solution aqueuse d'un homopolymère **P** de 2-acrylamido-2-méthylpropane sulfonate de sodium ou de potassium ou d'ammonium, l'homopolymère **P** ayant un poids moléculaire moyen en poids supérieur à 1 million de daltons, la solution aqueuse d'homopolymère **P** étant injectée dans une formation souterraine pour l'extraction assistée d'hydrocarbures (pétrole et/ou gaz) ou la fracturation hydraulique, ladite méthode comprenant les étapes successives suivantes :
- à un emplacement **A** :
   * préparation dans une unité mobile **U1** de 2-acrylamido-2-méthylpropane sulfonate de sodium ou de potassium ou d'ammonium sous forme cristalline (**AMPS.S**),
      le 2-acrylamido-2-méthylpropane sulfonate de sodium sous forme cristalline ayant un diagramme de diffraction des rayons X sur poudre comprenant des pics à 11,7° ; 12,2° ; 13,2° ; 13,5°; 15,6°; 16,8°; 17,8°; 18,5°; 19,1°; 20,6°; 21,4°; 23,3°; 25,1°; 25,8°; 26,9° ; 29,1° ; 29,5° ; 31,0° ; 33,0° ; 33,6° ; 34,4° ; 35,2° ; 35,9° ; 37,1° ; 38,4° ; 39,6° ; 41,1° ; 42,9° ; 45,1° ; 46,0° ; 47,2° ; 47,6°, degrés 2-thêta,
      le 2-acrylamido-2-méthylpropane sulfonate de potassium sous forme cristalline ayant un diagramme de diffraction des rayons X sur poudre comprenant des pics à 13,1° ; 14,4° ; 16,3° ; 19,8° 23,5° 24,3° 26,9° 27,6° 29,3° 30,6° 31,6° 34,3° 36,1° 41,7° 44,6° ; 46,7°, degrés 2-thêta,
      le 2-acrylamido-2-méthylpropane sulfonate d'ammonium sous forme cristalline ayant un diagramme de diffraction des rayons X sur poudre comprenant des pics à 10,1° ; 13,1° ; 13,2° ; 17,5° 15,6° 181° ; 19,5° 20,0° 21,4° 22,8° 23,6° 24,8° 25,1° ; 25,8°
      26,2° ; 27,4° ; 28,1° ; 29,4° ; 30,2° ; 30,8° ; 32,0° ; 32,9° ; 33,2° ; 33,9° ; 34,4° ; 35,0° ; 36,2° ; 37,7° ; 38,8° ; 39,6° ; 40,4° ; 41,4° ; 41,9° ; 42,8° ; 43,5° ; 44,8° ; 45,5° ; 45,7° ; 46,5° ; 47,0° ; 47,4°, degrés 2-thêta,
   * collecte d'une solution aqueuse **S1** de 2-acrylamido-2-méthylpropane sulfonate de sodium ou de potassium ou d'ammonium **AMPS.OS**, issue de la purge de la préparation de l'**AMPS.S** dans l'unité mobile **U1**,
- à un emplacement A' :
   * préparation dans une unité mobile **U3** d'un homopolymère **P** par polymérisation par voie gel d'une solution aqueuse **S3** d'**AMPS.S**,
   * dissolution dans une unité mobile **U4** du polymère **P** dans une solution saline **SS1** contenant au moins 1 g/L de sels alcalins et/ou alcalino-terreux dans l'eau pour obtenir une solution **SM** de polymère **P**,
   * transfert de la solution **SM** de l'emplacement **A'** vers un emplacement **B**,
- à l'emplacement **B** :
   * dilution dans une unité mobile **U5** d'au moins un facteur 4 et au maximum d'un facteur 60 de la solution **SM** par une solution saline **SS2** contenant au moins 1 g/L de sels alcalins et/ou alcalino-terreux dans l'eau pour obtenir une solution aqueuse **SF** contenant moins de 0.6% en poids de polymère **P**,
   * Injection de la solution **SF** dans la formation souterraine.

Les plages de valeurs incluent les bornes inférieure et supérieure. Ainsi, les plages de valeurs « entre 0,1 et 1,0 » et « de 0,1 à 1 » incluent les valeurs 0,1 et 1,0.

De manière générale, l'incertitude des pics des diagrammes de diffraction des rayons X sur poudre est généralement de l'ordre de +/- 0,1°.

Selon la présente invention, le poids moléculaire moyen en poids du polymère **P** est déterminé par mesure de la viscosité intrinsèque. La viscosité intrinsèque peut être mesurée par des méthodes connues de l'homme du métier et peut notamment être calculée à partir des valeurs de viscosité réduite pour différentes concentrations par une méthode graphique consistant à tracer les valeurs de viscosité réduite (sur l'axe des ordonnées) en fonction des concentrations (sur l'axe des abscisses) et en extrapolant la courbe à une concentration nulle. La valeur de viscosité intrinsèque est lue sur l'axe des ordonnées ou à l'aide de la méthode des moindres carrés. Ensuite, le poids moléculaire moyen en poids peut être déterminé par la célèbre équation de Mark-Houwink :
[η] = K M^{α}
[η] représente la viscosité intrinsèque du polymère déterminée par la méthode de mesure de la viscosité en solution,
K représente une constante empirique,
M représente le poids moléculaire du polymère,
α représente le coefficient de Mark-Houwink,
α et K dépendent du système particulier polymère-solvant. Des tableaux connus de l'homme du métier donnent les valeurs de α et K selon le système polymère-solvant.

L'emplacement **A** est avantageusement un emplacement comprenant au moins une unité mobile de stockage, au moins une unité mobile de mélange et au moins une unité mobile de filtration. Ainsi, l'emplacement **A** permet avantageusement de disposer d'eau propre pour la polymérisation radicalaire de l'**APMS.S** (par exemple l'eau issue d'un procédé de traitement des eaux industrielles et/ou pluviales).

La préparation du 2-acrylamido-2-méthylpropane sulfonate de sodium sous forme cristalline est faite selon le procédé décrit dans la demande de brevet FR2302303.

Le procédé de fabrication de la forme cristalline du sel de sodium de l'acide 2-acrylamido-2-méthylpropane sulfonique comprend au moins les étapes successives suivantes :
1) mélange d'acide 2-acrylamido-2-méthylpropane sulfonique avec une solution aqueuse SA_{Na-1} et au moins un sel de sodium, avantageusement pendant au moins 1 minute, afin de former une solution aqueuse ou une suspension aqueuse SA_{Na-2} ;
2) distillation à une pression inférieure à la pression atmosphérique de la solution aqueuse ou suspension aqueuse SA_{Na-2} afin de former une suspension S_{Na-1} ;
3) séparation solide / liquide de la suspension S_{Na-1} et isolement des cristaux de la suspension S_{Na-1} obtenus à l'issue de l'étape 2) sous la forme d'une composition C_{Na-1}.

Les cristaux obtenus sont sous forme cristalline du sel de sodium de l'acide 2-acrylamido-2-méthylpropane sulfonique.

Par sel(s) de sodium dans la solution ou suspension aqueuse SA₂, on entend au moins un sel(s) inorganique(s), par exemple l'hydroxyde de sodium, le carbonate de sodium, le bicarbonate de sodium ou leurs mélanges.

La préparation du 2-acrylamido-2-méthylpropane sulfonate de potassium sous forme cristalline est faite selon le procédé décrit dans la demande de brevet FR2302310.

Le procédé de fabrication de la forme cristalline du sel de potassium de l'acide 2-acrylamido-2-méthylpropane sulfonique comprend au moins les étapes successives suivantes :
1) mélange d'acide 2-acrylamido-2-méthylpropane sulfonique avec une solution aqueuse SA_{K-1} et au moins un sel de potassium, avantageusement pendant au moins 1 minute, afin de former une solution aqueuse ou une suspension aqueuse SA_{K-2} ;
2) distillation à une pression inférieure à la pression atmosphérique de la solution aqueuse ou suspension aqueuse SA_{K-2} afin de former une suspension S_{K-1} ;
3) séparation solide / liquide de la suspension S_{K-1} et isolement des cristaux de la suspension S_{K-1} obtenus à l'issue de l'étape 2) sous la forme d'une composition C_{K-1}.

Les cristaux obtenus sont sous forme cristalline du sel de potassium de l'acide 2-acrylamido-2-méthylpropane sulfonique.

Par sel(s) de potassium dans la solution aqueuse ou suspension aqueuse SA_{K-2}, on entend au moins un sel(s) inorganique(s), par exemple l'hydroxyde de potassium, le carbonate de potassium, le bicarbonate de potassium ou leurs mélanges.

La préparation du 2-acrylamido-2-méthylpropane sulfonate d'ammonium (CH₂=CH-C(=O)-NH-C(CH₃)₂-CH₂-S(=O)₂O^{- +}NH₄) sous forme cristalline est faite selon un procédé comprenant au moins les étapes successives suivantes :
1) Bullage d'ammoniaque gazeux dans une solution ou une suspension d'acide 2-acrylamido-2-méthylpropane sulfonique afin de former une solution S_{NH4-1} ;
2) Optionnellement évaporer de l'eau (avantageusement sous pression atmosphérique ou sous vide) ;
3) refroidissement de la solution aqueuse S_{NH4-1} afin d'obtenir une suspension S_{NH4-2} de cristaux de 2-acrylamido-2-méthylpropane sulfonate d'ammonium ;
4) séparation solide / liquide de la suspension S_{NH4-2} et isolement des cristaux de la suspension S_{NH4-2} obtenue à l'issue de l'étape 3) sous la forme d'une composition C_{NH4-1}.

L'unité mobile **U1** comprend avantageusement au moins une sous unité de mélange et au moins une sous unité de filtration. Ces sous unités sont connues de l'homme du métier et peuvent correspondre à celles décrites dans le document WO 2018/172676 et la demande de brevet FR2302303.

Cette unité mobile **U1** est une unité modulaire délocalisable qui peut être transportée par camion ou par transport ferroviaire.

Cette unité mobile **U1** contient une sous unité mobile de stockage pour récolter la solution **S1** d'**AMPS.OS**. Cette solution **S1** est issue de la purge de la préparation de l'**AMPS.S** et est donc constituée d'un mélange des filtrats et des solutions de lavage des cristaux d'**AMPS.S** (forme cristalline du sel d'AMPS). La sous unité mobile de stockage est préférentiellement une cuve.

Préférentiellement, l'**AMPS.S** est préparé à partir d'acide 2-acrylamido-2-méthylpropane sulfonique sous forme de poudre préalablement stocké à l'emplacement **A** dans une unité mobile de stockage située à proximité de l'unité mobile **U1** (et donc distincte de la sous unité mobile de stockage). Cette unité de stockage est réapprovisionnée par camion ou transport ferroviaire à partir de sites de production d'acide 2-acrylamido-2-méthylpropane sulfonique pouvant être distants de l'emplacement de plusieurs dizaines ou centaines de kilomètres. L'unité mobile de stockage à proximité de l'unité mobile **U1** peut avoir n'importe quelle forme et orientation. Elle peut être par exemple cylindrique ou rectangulaire et orientée horizontalement ou verticalement. Le volume et les dimensions ne sont limités que par la condition que les unités de stockage soient déplaçables.

Avantageusement l'acide 2-acrylamido-2-méthylpropane sulfonique sous forme de poudre stocké dans l'unité mobile de stockage à l'emplacement A a été préalablement obtenu sur son site de production par une réaction entre de l'acrylonitrile, de l'acide sulfurique fumant et de l'iso-butylène contenant moins de 1000 ppm de butadiène et moins de 100 ppm de butène (document WO 201746546).

Les diagrammes de diffraction des rayons X sur poudre pour l'**AMPS.S** sont effectués de manière conventionnelle par cristallographie aux rayons X, radiocristallographie ou diffractométrie de rayons X. Un exemple d'équipement est un diffractomètre Miniflex II de marque Rigaku équipé d'une source au cuivre.

De manière avantageuse, l'emplacement **A'** est un emplacement qui permet d'installer au moins une unité mobile de stockage, au moins une unité mobile de polymérisation et au moins une unité mobile de dilution. Ainsi, l'emplacement **A'** permet avantageusement de disposer d'eau propre pour la polymérisation radicalaire de l'**APMS.S** (par exemple l'eau issue d'un procédé de traitement des eaux industrielles et/ou pluviales) mais aussi d'eau de moindre qualité pour la préparation des solutions aqueuses (notamment **SS1** ou **SS2**).

L'unité mobile **U3** est avantageusement composée d'au moins une sous unité de polymérisation telle qu'un réacteur sous forme tubulaire conique inversé (cône vers le bas). Cette sous unité de polymérisation permet de décharger le gel de polymère par application d'une pression d'air en surface du gel ou sous forme d'un basculeur qui décharge la masse de gel en faisant basculer le réacteur. De manière avantageuse, cette unité mobile **U3** contient aussi des sous unités de stockage pour les additifs nécessaires à la polymérisation par voie gel (en général une unité de stockage par additif). Ces additifs sont par exemple les initiateurs (oxydant/réducteur, azoïques), les régulateurs de polymérisation, enzyme (glucose oxydase). Les additifs de polymérisation et les conditions de la polymérisation gel sont connus de l'homme de l'art. Les caractéristiques de chaque unité de stockage sont adaptées aux propriétés physico-chimiques et aux quantités des différents additifs. L'unité mobile **U3** est une unité modulaire délocalisable qui peut être transportée par camion ou par transport ferroviaire.

Préférentiellement, la polymérisation de la solution **S3** d'**AMPS.S** dans l'unité mobile **U3** est effectuée avec une concentration initiale en **AMPS.S** dans la solution **S3** supérieure à 20 % en poids, encore plus préférentiellement supérieure à 30% en poids, et encore plus préférentiellement supérieure à 40% en poids. La concentration initiale en **AMPS.S** dans la solution **S3** est avantageusement inférieure à 70 % en poids.

Avantageusement, la température initiale de polymérisation est la température ambiante, à savoir entre 15 et 30°C, et la température finale de polymérisation de la solution **S3** d'**AMPS.S** dans l'unité mobile **U3** est supérieure à 80°C. L'homme du métier saura adapter les conditions de polymérisations pour atteindre cette température.

Préférentiellement, la polymérisation gel de l'**AMPS.S** dans la solution **S3** au sein de l'unité mobile **U3** est initiée en présence de glucose oxydase. La polymérisation radicalaire exige l'absence de trace d'oxygène dans le milieu de polymérisation. La glucose oxydase a pour vocation de désoxygéner la solution **S3**. L'utilisation de bullage avec des gaz inerte tels l'azote ou l'argon est donc généralement inutile en présence de glucose oxydase. Ceci réduit d'autant plus le besoin de production locale de gaz inerte énergivore et les rejets atmosphériques, sources de pollution.

Le polymère **P** issu de la polymérisation gel dans l'unité mobile **U3** est dissous dans une unité mobile **U4** dans une solution saline **SS1** contenant au moins 1 g/L de sels alcalins et/ou alcalino-terreux dans l'eau pour obtenir une solution **SM** de polymère **P**.

L'unité mobile **U4** est une unité modulaire délocalisable qui peut être transportée par camion ou par transport ferroviaire.

Dans un mode de réalisation préféré, au terme de la préparation du polymère **P** par polymérisation par voie gel de la solution **S3** d'**AMPS.S** dans l'unité mobile **U3**, le gel de polymère **P** obtenu est granulé dans une sous unité de granulation pour obtenir des morceaux de gel de polymère **P**, qui sont directement dissous dans la solution **SS1** pour obtenir la solution **SM** dans l'unité mobile **U4**.

La taille des morceaux de gel de polymère **P** aqueux obtenus au terme de la granulation n'est pas spécifiquement limitée. Dans une réalisation de l'invention, les morceaux granulés de gel de polyacrylamide aqueux ont avantageusement une taille telle qu'au moins deux dimensions (longueur et diamètre dans le cas de morceaux sous forme de granules cylindriques) ne sont pas supérieures à 1 cm, de préférence pas supérieures à 0,5 cm. De préférence, trois dimensions (largeur, longueur et hauteur dans le cas de morceaux sous forme de parallélépipède) des morceaux de gel de polyacrylamide aqueux ne devraient pas être supérieures à 1 cm, de préférence pas supérieures à 0,5 cm. Aucune limite inférieure n'est nécessaire pour les morceaux de gel de polyacrylamide aqueux, car plus les morceaux sont petits, plus le polymère se dissout facilement. En général, les morceaux de gel de polyacrylamide aqueux peuvent avoir une taille telle que les trois dimensions sont aussi basses que 0,1 cm. Souvent, les morceaux de gel de polyacrylamide aqueux tendent à avoir trois dimensions comprises entre 0,1 cm et 0,5 cm chacune.

En principe, tout type de moyen de granulation peut être utilisé pour granuler le gel de polymère hydrosoluble en morceaux plus petits. Des exemples de moyens appropriés incluent des dispositifs de coupe tels que des couteaux ou des plaques perforées, des concasseurs, des pétrisseurs, des mélangeurs statiques ou dynamiques, ou des jets d'eau. L'homme du métier choisira le moyen approprié et ses conditions d'utilisation pour obtenir les morceaux de gels de tailles et de formes prédéterminées.

De manière avantageuse, les morceaux de gel de polymère **P** obtenus au terme de la granulation sont directement ajoutés dans une cuve de dissolution de l'unité mobile **U4**. Dans ce cas, la dissolution dans la solution saline **SS1** est accélérée au moyen d'une pale d'agitation. Les morceaux de gel peuvent aussi être dissous au sein d'une conduite équipée ou non de mélangeurs statiques ou dynamiques. La combinaison d'une conduite et d'une cuve de dissolution est aussi possible. De manière avantageuse, les morceaux de gel de polymère **P** ne sont pas stockés entre la granulation et la dissolution.

Avantageusement, entre les unités mobiles **U3** et **U4**, le polymère **P** sous forme de gel est convoyé par un convoyeur à vis pour être granulé dans une sous unité de granulation.

Préférentiellement, la solution saline **SS1** ou **SS2** contient entre 1 g/L et 350 g/L de sels alcalins et/ou alcalino-terreux dans l'eau, encore plus préférentiellement entre 10 g/L et 300 g/L.

Préférentiellement, la solution saline **SS1** ou **SS2** est puisée directement au sein de l'emplacement **A**. A titre d'exemple cette solution **SS1** ou **SS2** peut être de l'eau de mer puisée au sein d'une plateforme pétrolière offshore.

La solution saline **SS1** peut optionnellement être préparée au sein de l'unité mobile **U4** dans une cuve de dissolution et/ou dans une conduite équipée de mélangeurs statiques et/ou dynamiques en ajoutant à de l'eau les quantités de sels requises. La solution **SS1** ou **SS2** contient préférentiellement du sodium (sel alcalin) et/ou du calcium (sel alcalino-terreux), par exemple un sel choisi parmi le chlorure de calcium, le bromure de calcium, le chlorure de sodium, et leurs mélanges.

De manière avantageuse, l'unité mobile **U4** comprend au moins une sous unité de dissolution, par exemple une cuve dotée d'une pale d'agitation et/ou une conduite dotée de mélangeurs. De manière avantageuse, elle comprend également une cuve de stockage de la solution saline **SS1**.

Pendant la préparation de la solution **SS1** ou **SS2**, divers composés connus de l'homme de l'art peuvent être ajoutés, comme ceux cités dans le document SPE 152596. Ainsi la solution **SS1** ou **SS2** peut comprendre par exemple :
- Des agents anti-gonflement des argiles, par exemple le chlorure de potassium, ou le chlorure de choline, et/ou
- Des biocides pour éviter le développement de bactéries en particulier sulfato réductrices pouvant former des masses visqueuses réduisant les surfaces de passage. On peut citer, par exemple, le glutaraldéhyde, qui est le plus utilisé, ou encore le formaldéhyde ou les isothiazolinones, et/ou

- Des réducteurs d'oxygène, par exemple le bisulfite d'ammonium pour éviter la destruction des autres composants par oxydation et la corrosion des tubes d'injection, et/ou
- Des additifs anticorrosion pour protéger les tubes contre l'oxydation par les quantités résiduelles d'oxygène, le N,N dimethylformamide étant privilégié, et/ou
- Des lubrifiants, par exemple les distillats d'huile, et/ou
- Des chélatants pour le fer, par exemple l'acide citrique, l'EDTA (éthylène diamine tétra-acétique), les phosphonates, et/ou
- Des produits antitartres, par exemple les phosphates, les phosphonates, les polyacrylates ou l'éthylène glycol.

Pour cette unité mobile **U4**, aucune eau traitée pour la polymérisation n'est nécessaire pour la préparation de la solution **SS1**. Cette unité peut utiliser de l'eau de production pétrolière (conditionnée pour l'injection) ou de l'eau d'aquifère.

L'emplacement **B** est avantageusement un emplacement qui permet d'installer au moins une unité mobile de stockage, au moins une unité mobile de dilution. L'emplacement **B** permet notamment d'injecter un fluide dans une formation souterraine pour extraire des hydrocarbures (pétrole et/ou gaz).

L'unité mobile **U5** est avantageusement une unité délocalisable composée d'au moins une sous unité de dilution, par exemple une cuve dotée d'une pale d'agitation et/ou d'une conduite équipée de mélangeurs statiques et/ou dynamiques. Optionnellement, l'unité mobile **U5** comprend une cuve de stockage de la solution **SM**.

L'unité mobile **U5** est une unité modulaire délocalisable qui peut être transportée par camion ou par transport ferroviaire.

Au sein de cette unité mobile **U5**, la solution saline **SM** est diluée d'au moins un facteur 4 et au maximum d'un facteur 60 par la solution saline **SS2** pour obtenir une solution **SF** contenant moins de 0.6% en poids de polymère **P**. A titre d'exemple, pour une solution contenant 60% en poids de polymère **P**, une dilution d'un facteur 4 correspond à l'obtention d'une solution contenant 15% en poids de polymère **P**.

Préférentiellement, la solution **SF** contient entre 0.01% et 0.4 % en poids de polymère **P**, encore plus préférentiellement entre 0.02% et 0.3% en poids de polymère **P**.

Comme pour l'unité mobile **U4**, la solution saline **SS2** peut être préparée au sein de l'unité mobile **U5**, par exemple dans une cuve de dissolution en ajoutant à de l'eau les quantités de sels requises ou en puisant directement la solution **SS2** au sein de l'emplacement **B**.

Après avoir optionnellement été stockée dans une cuve de stockage, la solution **SF** est injectée dans la formation souterraine afin d'extraire les hydrocarbures (pétrole et/ou gaz). La récupération des hydrocarbures est réalisée soit par balayage de la formation souterraine (extraction assistée de manière conventionnelle des hydrocarbures) soit grâce à la pression naturelle des hydrocarbures après une opération de fracturation hydraulique (de manière non conventionnelle).

Ainsi, l'injection de la solution **SF** dans la formation souterraine est suivie d'une étape de récupération d'hydrocarbures par extraction assistée en balayant la formation souterraine au moyen de la solution **SF**, ou d'une étape de récupération d'hydrocarbures par fracturation hydraulique de la formation souterraine au moyen de la solution **SF**.

Selon un mode de réalisation préféré, la méthode d'injection de l'invention est réalisée avec des emplacements **A** et **A'** qui se recouvrent ou qui sont accolés. En d'autres termes, dans cette configuration les 2 emplacements ne font plus qu'un.

Préférentiellement, la méthode d'injection de l'invention comprend les étapes suivantes :
- à l'emplacement **A :** polymérisation (en solution, exemple de procédé : document US 2013090425) dans une unité **U2** de la solution **S1** d'**AMPS.OS** collectée dans l'unité mobile **U1** pour obtenir une solution aqueuse **S2** de polymère **P'**,
- transfert par des canalisations de la solution **S2** de l'unité **U2** de l'emplacement **A** vers l'unité mobile **U3** de l'emplacement **A'**,
- à l'emplacement **A'** : préparation dans une unité mobile **U3**, avant la polymérisation d'**AMPS.S**, d'une composition **CA'** comprenant la solution **S3** d'**AMPS.S** et au moins une partie de la solution **S2** de polymère **P'**, le rapport massique [**P'**]/[**AMPS.S**] étant compris entre 0,05 et 0,20, avec [**P'**] concentration en poids de polymère **P'** dans la composition **CA'** et [**AMPS.S**] concentration en poids d'**AMPS.S** dans la composition **CA'**.

Le transfert de la solution **S1** d'**AMPS.OS** de la sous unité de stockage de l'unité mobile **U1** vers l'unité **U2** se fait préférentiellement par une conduite (canalisation).

La polymérisation de la solution **S1** d'**AMPS.OS** dans l'unité **U2** est une polymérisation en solution connue de l'homme du métier pour obtenir un polymère **P'** de poids moléculaire moyen en poids avantageusement compris entre 500 et 500 000 daltons. L'ajout de la solution **S2** de polymère **P'** dans la solution **S3** se fait préférentiellement avant l'ajout d'initiateurs oxydo-réducteurs et/ou thermiques et/ou de glucose oxydase.

L'unité **U2** est une unité modulaire délocalisable qui peut être transportée par camion ou par transport ferroviaire et qui est composée d'au moins une sous unité de polymérisation, par exemple une cuve munie d'une pale d'agitation.

Selon les distances entre les emplacements **A'** et **B**, le transfert de la solution **SM** de l'emplacement **A'** à l'emplacement **B** se fait par des canalisations ou par des unités de transport.

Par exemple, les distances entre les emplacements **A'** et **B** peuvent être compris entre 10 et 3000 km, ou entre 10 et 1500 km, ou entre 20 et 500 km, ou encore entre 30 et 300 km.

Les canalisations assurant le transfert de la solution **SM** entre les emplacements A' et B sont préférentiellement rigides et peuvent inclure des mélangeurs statiques.

Pour le transport de la solution **SM** entre les emplacements **A'** et **B**, on utilise une unité de transport appropriée. L'unité de transport peut avoir un volume de 1 m³ à 40 m³, en particulier de 5 m³ à 40 m³, de préférence de 10 à 30 m³, par exemple de 20 m³ à 30 m³ ou de 15 à 25 m³. Des exemples d'unités de transport appropriées comprennent les navires comprenant au moins une ouverture ou les conteneurs-citernes.

Le transport de la solution **SM** entre les emplacements **A'** et **B** peut être effectué par tout type de moyen de transport adapté au transport de l'unité de transport, par exemple par camions, wagons ou navires.

Le terme "unité de transport" désigne une ou plusieurs unités de transport distinctes avantageusement telles que des conteneurs, par exemple des conteneurs ISO ou des conteneurs intermédiaires pour vrac, qui sont chargés sur des moyens de transport appropriés, par exemple des remorques, des wagons porte-conteneurs ou des navires. Le moyen de transport peut transporter une seule unité de transport ou une pluralité d'unités de transport. Le terme "unité de transport" inclut en outre les unités de transport dans lesquelles le compartiment de transport est fixé de manière temporaire ou permanente sur le moyen de transport, comme par exemple les camions-citernes ou les wagons-citernes.

Dans un mode de réalisation, le transport est effectué par des camions. L'unité de transport peut également être fixée sur un camion. Dans un mode de réalisation, l'unité de transport peut être un conteneur-citerne ISO.

Dans un autre mode de réalisation, des citernes fixées sur un camion peuvent être utilisées. Dans un mode de réalisation, le réservoir comprend une ouverture de sortie à l'extrémité arrière du camion et, pour faciliter le retrait du contenu, le réservoir peut être incliné. Dans un autre mode de réalisation, le réservoir comprend une ouverture de sortie sur le côté inférieur du réservoir. En outre, la citerne peut comprendre un cône sur le côté inférieur de la citerne et l'ouverture de sortie est située à l'extrémité inférieure du cône. Le remplissage de l'unité de transport avec la solution **SM** peut être effectué en pompant la solution **SM** dans l'unité de transport.

Le temps de transport, c'est-à-dire le temps de transport de l'unité de transport remplie de solution **SM** de polymère **P**, peut être très différent, en fonction de la distance entre les emplacements **A'** et **B**. Il peut varier de quelques minutes à plusieurs jours, par exemple de 1 h à 28 jours, en particulier de 2 heures à 14 jours, notamment de 5 heures à 7 jours. Dans un mode de réalisation de l'invention, une étape d'homogénéisation telle que décrite ci-dessous peut être effectuée en cours de transport. Dans un mode de réalisation, l'unité de transport, par exemple un camion, peut comprendre un tambour rotatif permettant d'effectuer l'homogénéisation. Dans d'autres modes de réalisation, l'unité de transport peut comprendre une boucle de circulation équipée d'une pompe et éventuellement d'unités de mélange, par exemple des mélangeurs statiques, de sorte que la solution **SM** de polymère **P** peut être mise en circulation au cours du transport.

Avantageusement, la solution **SM** de polymère **P** à l'emplacement **A'** est stockée dans une unité de maturation et stockage avant d'être transférée à l'emplacement **B**. Cette unité de maturation et stockage est avantageusement constituée d'une ou plusieurs cuves en série dotées de pales d'agitations.

### Figures

La figure 1 représente un premier mode de réalisation de la présente invention.
La figure 2 représente un deuxième mode de réalisation de la présente invention selon lequel le monomère **AMPS.S** est polymérisé en présence du polymère **P'**.

### Description des figures

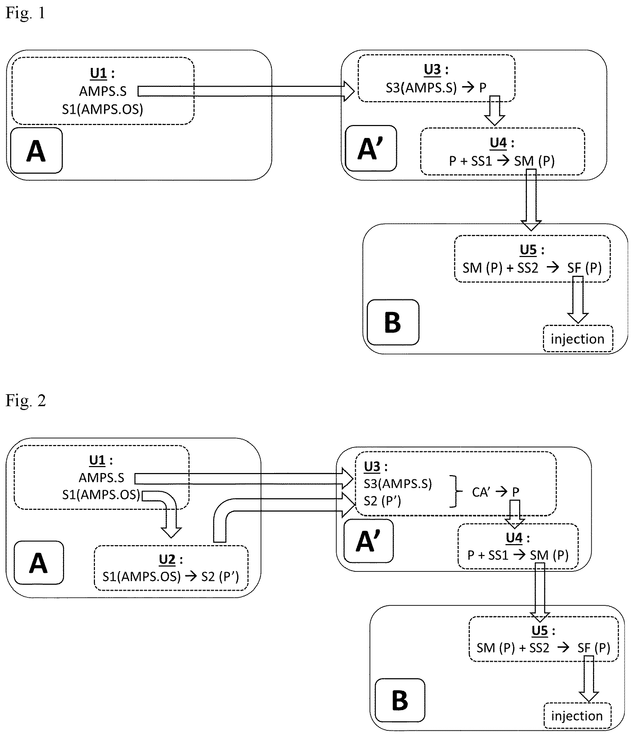

Le dispositif de la figure 1 comprend :
- un emplacement **A** incluant :
   * la préparation dans une unité mobile **U1** d'**AMPS.S**,
   * la collecte de la solution aqueuse **S1** d'**AMPS.OS**, issue de la purge de la préparation de l'**AMPS.S**,
- un emplacement **A'** incluant :
   * la préparation dans une unité mobile **U3** d'un homopolymère **P** par polymérisation par voie gel d'une solution aqueuse **S3** d'**AMPS.S**,
   * la dissolution dans une unité mobile **U4** du polymère **P** dans une solution saline **SS1** pour obtenir une solution **SM** de polymère **P**,
   * le transfert de la solution **SM** de l'emplacement **A'** vers un emplacement **B**,
- un l'emplacement **B** incluant :
   * la dilution dans une unité mobile **U5** de la solution **SM** par une solution saline **SS2** pour obtenir une solution **SF** contenant moins de 0.6% en poids de polymère **P**,
   * l'injection de la solution **SF** dans la formation souterraine.

Le dispositif de la figure 2 comprend :
- un emplacement **A** incluant :
   * la préparation dans une unité mobile **U1** d'**AMPS.S**,
   * la collecte de la solution aqueuse **S1** d'**AMPS.OS**, issue de la purge de la préparation de l'**AMPS.S**,
- un emplacement **A'** incluant :
   * la préparation dans une unité mobile **U3** d'un homopolymère **P** par polymérisation par voie gel d'une solution aqueuse **S3** d'**AMPS.S**,
   * la préparation dans une unité mobile **U3**, avant la polymérisation d'**AMPS.S**, d'une composition **CA'** contenant la solution **S3** d'**AMPS.S** et au moins une partie de la solution **S2** de polymère **P'**,
   * la dissolution dans une unité mobile **U4** du polymère **P** dans une solution saline **SS1** pour obtenir une solution **SM** de polymère **P**,
   * le transfert de la solution **SM** de l'emplacement **A'** vers un emplacement **B**,
   * la polymérisation (en solution) dans une unité **U2** de la solution **S1** d'**AMPS.OS** pour obtenir une solution aqueuse **S2** de polymère **P'**,
- le transfert de la solution **S2** de l'unité **U2** de l'emplacement **A** vers l'unité mobile **U3** de l'emplacement **A'**,
- un l'emplacement **B** incluant :
   * la dilution dans une unité mobile **U5** de la solution **SM** par une solution saline **SS2** pour obtenir une solution **SF** contenant moins de 0.6% en poids de polymère **P**,
   * l'injection de la solution **SF** dans la formation souterraine.

## Revendications

1. Méthode d'injection d'une solution aqueuse d'un homopolymère **P** de 2-acrylamido-2-méthylpropane sulfonate de sodium ou de potassium ou d'ammonium, l'homopolymère **P** ayant un poids moléculaire moyen en poids supérieur à 1 million de daltons, la solution aqueuse d'homopolymère **P** étant injectée dans une formation souterraine pour l'extraction assistée d'hydrocarbures ou la fracturation hydraulique, ladite méthode comprenant les étapes successives suivantes :
- à un emplacement **A** :
* préparation dans une unité mobile **U1** de 2-acrylamido-2-méthylpropane sulfonate de sodium ou de potassium sous forme cristalline (**AMPS.S**),
le 2-acrylamido-2-méthylpropane sulfonate de sodium sous forme cristalline ayant un diagramme de diffraction des rayons X sur poudre comprenant des pics à 11,70° ; 12,20° ; 13,2° ; 13,5° ; 15,60° ; 16,80° ; 17,80° ; 18,5° ; 19,1° ; 20,6° ; 21,40° ; 23,3° ; 25,1° ; 25,8° ; 26,9° ; 29,10° ; 29,50° ; 31,0° ; 33° ; 33,6° ; 34,4° ; 35,2° ; 35,9° ; 37,1° ; 38,4° ; 39,6° ; 41,10° ; 42,90° ; 45,10° ; 46,0° ; 47,2° ; 47,6° degrés 2-thêta,
le 2-acrylamido-2-méthylpropane sulfonate de potassium sous forme cristalline ayant un diagramme de diffraction des rayons X sur poudre comprenant des pics à 13,10° ; 14,4° ; 16,3° ; 19,8° ; 23,50° ; 24,3° ; 26,90° ; 27,6° ; 29,3° ; 30,6° ; 31,6° ; 34,3° ; 36,1° ; 41,7° ; 44,6° ; 46,7°, degrés 2-thêta,
le 2-acrylamido-2-méthylpropane sulfonate d'ammonium sous forme cristalline ayant un diagramme de diffraction des rayons X sur poudre comprenant des pics à 10,10° ; 13,10° ; 13,2° ; 17,5° ; 15,60° ; 18,10° ; 19,50° ; 20,0° ; 21,4° ; 22,8° ; 23,6° ; 24,8° ; 25,1 ; 25,8 26,2 ; 27,4° ; 28,10° ; 29,4 ; 30,2 ; 30,8 ; 32,0 ; 32,9 ; 33,2 ; 33,9 ; 34,4 ; 35,0 ; 36,20 ; 37,70 ; 38 ,80 ; 39,6 ; 40,4 ; 41,4° ; 41,9 ; 42,8 ; 43,5 ; 44,8 ; 45,5° ; 45,7° ; 46,5 ; 47,0 ; 47,4°, degrés 2-thêta,
* collecte d'une solution aqueuse **S1** de 2-acrylamido-2-méthylpropane sulfonate de sodium ou de potassium ou d'ammonium **AMPS.OS**, issue de la purge de la préparation de l'**AMPS.S** dans l'unité mobile **U1**,
- à un emplacement **A'** :
* préparation dans une unité mobile **U3** d'un homopolymère **P** par polymérisation par voie gel d'une solution aqueuse **S3** d'**AMPS.S**,
* dissolution dans une unité mobile **U4** du polymère **P** dans une solution saline **SS1** contenant au moins 1 g/L de sels alcalins et/ou alcalino-terreux dans l'eau pour obtenir une solution **SM** de polymère **P**,
* transfert de la solution **SM** de l'emplacement **A'** vers un emplacement **B**,
- à l'emplacement **B** :
* dilution dans une unité mobile **U5** d'au moins un facteur 4 et au maximum d'un facteur 60 de la solution **SM** par une solution saline **SS2** contenant au moins 1 g/L de sels alcalins et/ou alcalino-terreux dans l'eau pour obtenir une solution **SF** contenant moins de 0.6% en poids de polymère **P**,
* injection de la solution **SF** dans la formation souterraine.

2. Méthode selon la revendication 1, **caractérisée en ce que** les emplacements **A** et **A'** se recouvrent ou sont accolés.

3. Méthode selon la revendication 1 ou 2, **caractérisée en ce qu'**elle comprend les étapes suivantes :
- à l'emplacement **A :** polymérisation dans une unité **U2** de la solution **S1** d'**AMPS.OS** collectée dans l'unité mobile **U1** pour obtenir une solution aqueuse **S2** de polymère **P'**,
- transfert par des canalisations de la solution **S2** de l'unité **U2** de l'emplacement **A** vers l'unité mobile **U3** de l'emplacement **A'**,
- à l'emplacement **A'** : préparation dans une unité mobile **U3**, avant la polymérisation d'**AMPS.S**, d'une composition **CA'** contenant la solution **S3** d'**AMPS.S** et au moins une partie de la solution **S2** de polymère **P'**, le rapport massique [**P'**]/[**AMPS.S**] étant compris entre 0,05 et 0,20, avec [**P'**] concentration en poids de polymère **P'** dans la composition **CA'** et [**AMPS.S**] concentration en poids d'**AMPS.S** dans la composition **CA'**.

4. Méthode selon l'une des revendications précédentes, **caractérisée en ce que** le transfert de la solution **SM** de l'emplacement **A'** vers l'emplacement **B** se fait par des canalisations ou par des unités de transport.

5. Méthode selon l'une des revendications précédentes, **caractérisée en ce que** l'**AMPS.S** est préparé à partir d'acide 2-acrylamido-2-méthylpropane sulfonique préalablement stocké à l'emplacement **A** dans une unité mobile de stockage.

6. Méthode selon l'une des revendications précédentes, **caractérisée en ce qu'**au terme de la préparation du polymère **P** par polymérisation par voie gel de la solution **S3** d'**AMPS.S** dans l'unité mobile **U3**, le gel de polymère **P** obtenu est granulé dans une unité de granulation pour obtenir des morceaux de gel de polymère **P**, qui sont directement dissous dans la solution saline contenant au moins 1 g/L de sels alcalins et/ou alcalino-terreux pour obtenir la solution **SM** dans l'unité mobile **U4**.

7. Méthode selon l'une des revendications précédentes, **caractérisée en ce que** la polymérisation du polymère **P** dans l'unité mobile **U3** est initiée en présence de glucose oxydase.

8. Méthode selon l'une des revendications précédentes, **caractérisée en ce que** la solution **SM** à l'emplacement **A'** est stockée dans une unité de maturation et stockage avant d'être transférée à l'emplacement **B**.

9. Méthode selon l'une des revendications précédentes, **caractérisée** en ce la polymérisation de la solution **S3** d'**AMPS.S** dans l'unité mobile **U3** est effectuée avec une concentration initiale en **AMPS.S** dans la solution **S3** supérieure à 20 % en poids.

10. Méthode selon l'une des revendications précédentes, **caractérisée en ce que** la température finale de polymérisation de la solution **S3** d'**AMPS.S** dans l'unité mobile **U3** est supérieure à 80°C.

11. Méthode selon l'une des revendications précédentes, **caractérisée en ce que** l'injection de la solution **SF** dans la formation souterraine est suivie d'une étape de récupération d'hydrocarbures par extraction assistée en balayant la formation souterraine au moyen de la solution **SF**.

12. Méthode selon l'une des revendications précédentes, **caractérisée en ce que** l'injection de la solution **SF** dans la formation souterraine est suivie d'une étape de récupération d'hydrocarbures par fracturation hydraulique de la formation souterraine au moyen de la solution **SF**.

13. Méthode selon l'une des revendications 3 ou 5, **caractérisée en ce que** le polymère **P'** présente un poids moléculaire moyen en poids compris entre 500 et 500 000 daltons.
